(19) Europäisches Patentamt / European Patent Office / Office européen des brevets

(11) **EP 3 546 338 B1**

(12) **EUROPEAN PATENT SPECIFICATION**

(45) Date of publication and mention
of the grant of the patent:
**20.05.2026 Bulletin 2026/21**

(21) Application number: **17872517.2**

(22) Date of filing: **30.10.2017**

(51) International Patent Classification (IPC):
**B63H 21/38** $^{(2006.01)}$     **F02D 19/06** $^{(2006.01)}$
**F02D 19/08** $^{(2006.01)}$     **F02M 37/00** $^{(2006.01)}$
**F02D 41/00** $^{(2006.01)}$     **F02M 21/10** $^{(2006.01)}$

(52) Cooperative Patent Classification (CPC):
**F02D 41/0025; B63H 21/38; F02D 19/0613;**
**F02D 19/0634; F02D 19/0663; F02M 21/10;**
**F02M 37/0064;** F02D 19/0628; F02D 19/0665;
F02D 19/0678; F02D 19/0681; F02D 19/081;
Y02T 10/30

(86) International application number:
**PCT/KR2017/012081**

(87) International publication number:
**WO 2018/093064 (24.05.2018 Gazette 2018/21)**

(54) **SYSTEM AND METHOD FOR SWITCHING SHIP FUEL OIL**

SYSTEM UND VERFAHREN ZUM WECHSELN VON SCHIFFSHEIZÖL

SYSTÈME ET PROCÉDÉ DE COMMUTATION DE MAZOUT DE NAVIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.11.2016 KR 20160154939**

(43) Date of publication of application:
**02.10.2019 Bulletin 2019/40**

(73) Proprietor: **Hanwha Ocean Co., Ltd.**
**Geoje-si, Gyeongsangnam-do 53302 (KR)**

(72) Inventors:
• **NAM, Byung Tak**
**Geoje-si**
**Gyeongsangnam-do 53307 (KR)**
• **LEE, Won Chan**
**Geoje-si**
**Gyeongsangnam-do 53301 (KR)**
• **JANG, Hoon**
**Geoje-si**
**Gyeongsangnam-do 53300 (KR)**
• **JEONG, Il Su**
**Geoje-si**
**Gyeongsangnam-do 53309 (KR)**

(74) Representative: **Cabinet Beau de Loménie**
**103, rue de Grenelle**
**75340 Paris Cedex 07 (FR)**

(56) References cited:
EP-A1- 2 211 041     DE-A1- 102007 056 819
DE-A1- 102012 025 021     JP-U- H0 561 450
JP-U- S60 153 871     KR-A- 20110 080 785
KR-A- 20130 014 147     KR-A- 20130 088 335
KR-A- 20150 081 957     KR-A- 20150 081 957
KR-A- 20160 044 094     KR-A- 20160 074 839

• ANONYMOUS ET AL: "Viscosity blending of fuel
and lubrication oils - Mooring Marine
Consultancy", 25 April 2015 (2015-04-25),
XP055697488, Retrieved from the Internet
<URL:https://mooringmarineconsultancy.
wordpress.com/2015/04/25/
viscosity-blending-of-fuel-and-lubrication-oils/>
[retrieved on 20200520]

**Description**

[Technical Field]

The present invention relates to a ship fuel oil change over system and method which are capable of changing over the fuel for an engine between different types of fuel oils.

[Background Art]

Examples of fuel oil that can be used as fuel for a marine engine include heavy fuel oil (HFO), marine gas oil (MGO), and marine diesel oil (MDO).

HFO is dark brown viscous oil obtained after extracting gasoline, kerosene, light oil, etc. from crude oil and is the densest petroleum product obtained in liquid form. Since HFO has a flash point of about 40°C, is harder to evaporate than kerosene, light oil, and especially gasoline, and has a viscosity of 180 cSt to 700 cSt, it is necessary to heat HFO to a temperature of 100°C to 140°C to adjust the viscosity of HFO to 10 cSt to 25 cSt, which is a viscosity level required by an engine. Further, since HFO contains water, foreign matter, and solids, HFO needs to be cleaned by a purifier before being supplied to a marine engine.

MGO and MDO are marine fuel oil of higher quality than HFO and are classified according to presence/absence of residue and sulfur content. MGO and MDO do not require any separate heater to be adjusted to a viscosity level required by an engine due to low viscosity thereof, have a high calorific value, and are free from residues. In addition, MGO and MDO are much lower in content of sulfur, which generates sulfur oxide ($SO_x$), than HFO. Therefore, a ship sailing in a sulfur oxide emission control area or entering a port within a sulfur oxide emission control area needs to use MGO or MDO as fuel for an engine. However, MGO and MDO are more expensive than HFO and often have a viscosity below a minimum level required by an engine, thus requiring a cooling device to increase viscosity. EP 2 211 041 A1 and KR 2016 0074839 A disclose examples of fuel supply devices.

[Disclosure]

[Technical Problem]

Since fuel oil products, such as HFO, MGO and MDO, have different chemical and physical characteristics and are different in price, it is necessary to appropriately change the kind of fuel oil supplied to an engine in accordance with operating conditions of a ship.

When changing over the fuel for the engine between different types of fuel oils having different temperatures is performed through a mixing process, it is necessary to maintain a viscosity of a fuel oil blend supplied to the engine within a certain range meeting a viscosity level required by the engine while maintaining a rate of temperature change of a fuel oil blend less than or equal to a predetermined value per minute so as to prevent damage to the engine and various related devices. If sudden temperature changes occur in the fuel oil blend due to an incorrect blending ratio, the engine and various related devices can suffer from rapid thermal expansion or thermal shrinkage, causing damage thereto, such as leakage, loss of lubricating functions, wear, and the like.

Gradual fuel change over a long period of time can prevent sudden temperature changes of the fuel oil blend. However, with increasing change over time, consumption of expensive MGO or MDO increases, causing economic loss.

The present invention is aimed at providing a ship fuel oil switching system and method which can minimize the cost of fuel without affecting the operating speed of a ship and the performance and lifespan of an engine and various related devices.

[Technical Solution]

In accordance with one aspect of the present invention, there is provided a system for switching ship fuel oil for an engine between different types of fuel oils, the system as defined in claim 1 including: a supply unit supplying fuel oil; a circulation unit circulating the fuel oil received from the supply unit; and a controller controlling the supply unit and the circulation unit, wherein the supply unit comprises a plurality of tanks respectively storing the different types of fuel oils; the engine receives the fuel oil from the circulation unit; the fuel oil remaining after use in the engine is recirculated through the circulation unit; and the controller regulates a blended ratio of the fuel oil to be sent to the engine by controlling flow rates of the different types of fuel oils discharged from the plurality of tanks.

The supply unit further includes: a plurality of discharge lines through which the respective different types of fuel oils are discharged from the plurality of tanks; and a plurality of control valves disposed on the plurality of discharge lines, respectively, and the controller regulates the blended ratio of the fuel oil by adjusting opening rates of the plurality of control valves.

The supply unit may further include a first flow meter measuring a flow rate of the fuel oil to be sent to the circulation unit.

The first flow meter may indicate a flow rate equal to a fuel oil consumption per hour of the engine.

The supply unit may further include a plurality of check valves disposed on the plurality of discharge lines, respectively.

The circulation unit may further include a circulation pump pressurizing and circulating the fuel oil.

The circulation pump may maintain a pressure of the fuel oil circulating through the circulation unit at 8 bar to 10 bar.

A flow rate of the fuel oil circulating through the circulation unit may correspond to about three times a maximum fuel consumption of the engine.

The controller includes a ratio calculation unit; the circulation unit further includes a first temperature sensor measuring a temperature of the fuel oil to be supplied to the engine and a viscosity sensor measuring a viscosity of the fuel oil to be supplied to the engine; a value of the temperature of the fuel oil measured by the first temperature sensor and a value of the viscosity of the fuel oil measured by the viscosity sensor are transmitted to the ratio calculation unit; and the ratio calculation unit calculates a blended ratio of the different types of fuel oils in the fuel oil circulating through the circulation unit.

The ratio calculation unit may find a viscosity blending index (VBI) according to Equation: $VBI = 14.534 \times \ln(\ln(v+0.8))+10.975$, where v denotes a viscosity in cSt, wherein $1 \, cSt = 1 \, mm^2/s$, of each component of the fuel oil circulating through the circulation unit and may find $w\_A$ and $w\_B$ according to Equations: $VBI\_blend = (w\_A \times VBI\_A) + (w\_B \times VBI\_B)$, where $w\_A$ denotes a weight proportion of component A in a fuel oil blend and a weight proportion w of each component is determined at a given temperature; and $v\_blend = \{\exp(\exp(VBI\_blend-10.975) \div 14.534\} - 0.8$, where $v\_blend$ denotes a viscosity of the fuel oil blend.

The controller further includes an integrated automation system, wherein the integrated automation system receives: a value of the blended ratio of the fuel oil calculated by the ratio calculation unit; the value of the temperature of the fuel oil transmitted from the first temperature sensor to the ratio calculation unit; and the value of the viscosity of the fuel oil transmitted from the viscosity sensor to the ratio calculation unit, from the ratio calculation unit.

The integrated automation system regulates the temperature and blended ratio of the fuel oil such that the viscosity value of the fuel oil received from the ratio calculation unit meets a viscosity level required by the engine, receives feedback on the regulated temperature of the fuel oil from the temperature value measured by the first temperature sensor and received from the ratio calculation unit, and receives feedback on the regulated blended ratio of the fuel oil from the viscosity value measured by the viscosity sensor and received from the ratio calculation unit.

The circulation unit may further include a heater, wherein, when a viscosity of the fuel oil circulating through the circulation unit is above a viscosity level required by the engine, the heater may heat the fuel oil.

The circulation unit may further include a cooler, wherein, when a viscosity of the fuel oil circulating through the circulation unit is below a viscosity level required by the engine, the cooler may cool the fuel oil.

The circulation unit may further include a fuel oil duct disposed downstream of the engine to temporarily store the fuel oil remaining after use in the engine.

In accordance with another aspect of the present invention, not claimed, there is provided a method for switching fuel for an engine between different types of fuel oils, the method comprising the steps of: 1) supplying only a second type of fuel oil to the engine by fully opening a second control valve supplying the second type of fuel oil and fully closing a first control valve supplying a first type of fuel oil; 2) calculating, by a ratio calculation unit, a blended ratio of the different types of fuel oils in fuel oil to be supplied to the engine; 3) receiving a fuel oil change over signal from a user; 4) gradually opening the first control valve such that the first type of fuel oil is increasingly discharged at a predetermined rate of change in flow rate per hour; 5) gradually closing the second control valve such that the second type of fuel oil is decreasingly discharged at a predetermined rate of change in flow rate per hour, when the first control valve is fully opened; and 6) determining that fuel oil change over has been completed, when the second control valve is fully closed and a proportion of the first type of fuel oil calculated by the ratio calculation unit is more than or equal to a predetermined value.

The ratio calculation unit may calculate a blended ratio of fuel oil to be supplied to the engine using a temperature and viscosity of the fuel oil as variables.

When the fuel oil change over signal is received from the user in step 3), a viscosity of fuel oil to be supplied to the engine may be automatically set, and, upon determining that fuel oil change over has been completed in step 6), the viscosity of the fuel oil to be supplied to the engine may be automatically set.

In accordance with a further aspect of the present invention, not claimed, there is provided a method for switching fuel oil supplied to a marine engine between a first type of fuel oil and a second type of fuel oil, wherein the first type of fuel oil has a different viscosity than the second type of fuel oil, and a flow rate of the first type of fuel oil and a flow rate of the second type of fuel oil are controlled such that the time required for mixing the first type of fuel oil with the second type of fuel oil and sending the fuel oil blend to the engine is less than or equal to a predetermined value and a temperature change upon mixing the first type of fuel oil with the second type fuel oil is less than or equal to a predetermined value.

When only the first fuel oil is supplied to the engine, a feed rate of the second type of fuel oil may be increased until the feed rate of the second type of fuel oil reaches a maximum value thereof, followed by decreasing a feed rate of the first type of fuel oil such that only the second type of fuel oil is supplied to the engine.

Feedback on flow rate control may be received by calculating a blended ratio of fuel oil to be supplied to the engine using a viscosity and temperature of the fuel oil as variables.

[Advantageous Effects]

The present invention provides a ship fuel oil switching system and method which can precisely predict when changing over of fuel oil is completed, thereby providing accurate determination as to when a ship can enter a sulfur oxide emission control area. In addition, the ship fuel oil switching system can ensure that fuel oil change over is completed, thereby satisfying emission regulations in the sulfur oxide emission control area.

In addition, the ship fuel oil switching system and method according to the present invention can minimize fuel oil change over time so as to minimize use of MGO or MDO, which is relatively expensive, thereby reducing the cost of fuel.

Further, the ship fuel oil switching system and method according to the present invention can satisfy the temperature change per minute and viscosity of the fuel oil required by each device, thereby minimizing damage to the devices. Moreover, the fuel oil change over process can be performed automatically, thereby saving labor costs while improving accuracy.

Furthermore, the ship fuel oil switching system and method according to the present invention can improve operational safety by including a safety device protecting each device during change-over of fuel oil.

[Description of Drawings]

FIG. 1 is a schematic diagram of a ship fuel oil switching system according to a first exemplary embodiment of the present invention.

FIG. 2 is a schematic diagram of a ship fuel oil switching system according to a second exemplary embodiment which is not part of the present invention.

FIG. 3 is a schematic diagram of a ship fuel oil switching system according to a third exemplary embodiment which is not part of the present invention.

[Best Mode]

Hereinafter, an embodiment of the present invention, and examples being not which being not part of the present invention, will be described with reference to the accompanying drawings. A ship fuel oil switching system and method according to the present invention may be applied to various ships such as LNG carriers, LNG-fueled ships, drill ships, and offshore structures. In addition, the ship fuel oil switching system and method according to the present invention may be applied to any engine capable of running on different types of fuel oils. It should be understood that the present invention may be embodied in different ways and is not limited to the following embodiments.

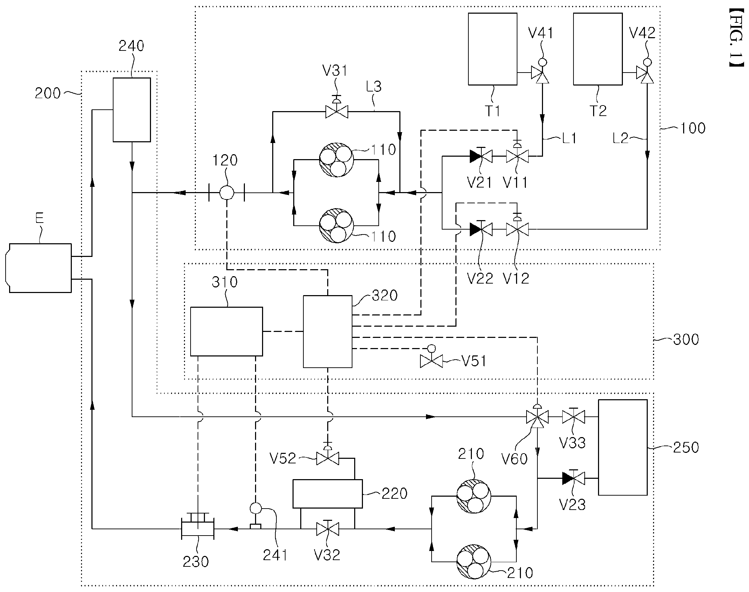

FIG. 1 is a schematic view of a ship fuel oil switching system according to a first exemplary embodiment of the present invention.

Referring to FIG. 1, the ship fuel oil switching system according to this embodiment includes a supply unit 100, a circulation unit 200, and a controller 300.

In this embodiment, the supply unit 100 includes a plurality of tanks T1, T2, a plurality of control valves V11, V12, and a supply pump 110 and sends fuel oil stored in the plurality of tanks T1, T2 to the circulation unit 200.

In this embodiment, the plurality of tanks T1, T2 stores different types of fuel oils. In this embodiment, each of the plurality of tanks T1, T2 may be any one of an HFO service tank, an HFO settling tank, an HFO bunker tank, an MDO service tank, an MDO storage tank, an MGO service tank, and an MGO storage tank.

Emergency shutoff valves V41, V42 may be disposed on respective discharge lines L1, L2 through which the different types of fuel oils are discharged from the plurality of tanks T1, T2. In this embodiment, the emergency shutoff valves V41, V42 are on-off controlled by pneumatic or hydraulic pressure and serve to shutoff supply of fuel oil when a fire occurs, thereby preventing the fire from spreading.

In this embodiment, the present invention will be described assuming that the supply unit includes two tanks T1, T2, wherein a first tank T1 stores MGO and a second tank T2 stores HFO.

In this embodiment, the plurality of control valves V11, V12 is respectively disposed on the plurality of discharge lines L1, L2 through which the different types of fuel oils are discharged from the plurality of tanks T1, T2. When the supply unit according to this embodiment includes two tanks T1, T2, a first control valve V11 is disposed on a first discharge line L1 through which a first type of fuel oil is discharged from the first tank T1 and a second control valve V12 is disposed on a second discharge line L2 through which a second type of fuel oil is discharged from the second tank T2.

In this embodiment, the plurality of control valves V11, V12 is controlled in opening rate by an integrated automation system (IAS) 320 of the controller 300 described below to regulate respective flow rates of the different types of fuel oils supplied from the plurality of tanks T1, T2 to the supply pump 110. In this embodiment, the plurality of control valves V11, V12 may be configured to be automatically controlled in opening rate by the integrated automation system 320 in ordinary times and to be manually operated in an emergency.

In this embodiment, the supply pump 110 increases the pressure of fuel oil discharged from the plurality of tanks T1, T2 to supply the fuel oil to the circulation unit 200 and may include a plurality of supply pumps connected in parallel. The different types of fuel oils respectively discharged from the plurality of tanks T1, T2 are mixed together before being supplied to the supply pump 110.

When the supply unit according to this embodiment includes the first tank T1 storing MGO and the second tank T2 storing HFO, the first discharge line L1 delivering MGO from the first tank T1 to the supply pump 110 and the second discharge line L2 delivering HFO from the second tank T2 to the supply pump 110 join each other upstream of the supply pump 110, such that MGO discharged from the first tank T1 and HFO discharged from the second tank T2 are mixed together upstream of the supply pump 110 before being supplied to the supply pump 110.

In this embodiment, the supply unit 100 may further include a return line L3 branching off downstream of the supply pump 110 and joining upstream of the supply pump 110. In this embodiment, the fuel oil pressurized by the supply pump 110 in excess of what is required by an engine E is returned upstream of the supply pump 110 through the return line L3. A first valve V31 controlling the flow rate and on-off of a fluid may be disposed on the return line L3.

In this embodiment, the supply unit 100 may further include a first flow meter 120 disposed downstream of the supply pump 110. In this embodiment, the first flow meter 120 measures the flow rate of fuel oil that is a blend of the different types of fuel oils respectively discharged from the plurality of tanks T1, T2 to be supplied to the circulation unit 200 by the supply pump 110. In this embodiment, a flow rate value measured by the first flow meter 120 may be transmitted to the integrated automation system 320.

The circulation unit 200 circulates the fuel oil blend to the engine E and the supply unit 100 resupplies the same amount of fuel oil as that consumed by the engine E to the circulation unit 200. Thus, the system may be operated such that the first flow meter 120 indicates a flow rate equal to a fuel oil consumption per hour of the engine E. Accordingly, if the flow rate indicated by the first flow meter 120 is below or above the fuel oil consumption per hour of the engine E, it can be determined that the system fails.

In this embodiment, the supply unit 100 may further include a plurality of check valves V21, V22 respectively disposed on the plurality of discharge lines L1, L2 through which the different types of fuel oils are discharged from the plurality of tanks T1, T2. When the supply unit according to this embodiment includes two tanks T1, T2, a first check valve V21 is disposed on the first discharge line L1 through which a first type of fuel oil is discharged from the first tank T1 and a second check line V2 is disposed on the second discharge line L2 through which a second type of fuel oil is discharged from the second tank T2.

When all of the plurality of control valves V11, V12 can be open, there is a possibility of that fuel oil discharged from one tank flow into the other tank. For example, when the supply unit according to this embodiment includes the first tank T1 storing MGO and the second tank T2 storing HFO, both the first control valve V11 and the second control valve V12 are open during fuel oil change over, whereby a fraction of MGO discharged from the first tank T1 can flow into the second tank T2 through the first control valve V11 and the second control valve V12, or a fraction of HFO discharged from the second tank T2 can flow into the first tank T1 through the second control valve V12 and the first control valve V11.

According to the present invention, with the plurality of check valves V21, V22, it is possible to prevent fuel oil discharged from one tank from flowing into the other tank, thereby prevent different types of fuel oils from being mixed in each of the tanks T1, T2.

In this embodiment, the circulation unit 200 includes a circulation pump 210, a first temperature sensor 241, and a viscosity sensor 230 and circulates the fuel oil supplied from the supply unit 100 to supply the fuel oil to the engine E.

In this embodiment, the circulation pump 210 increases the pressure of the fuel oil supplied from the supply unit 100 to circulate the fuel oil and may include a plurality of circulation pumps connected in parallel. In this embodiment, the circulation unit 200 is preferably maintained at a pressure of about 8 bar to about 10 bar by being pressurized by the circulation pump 210.

When HFO, which has low viscosity, is used as fuel for the engine E, heating of the HFO may be required to adjust the viscosity of the HFO to a level required by the engine E. Heating of the HFO can vaporize impurities contained in HFO, such as organic compounds, water, and the like, which can damage the pump and interfere with fuel oil injection into the engine E.

In the ship fuel oil switching system according to this embodiment, since heating of HFO is conducted after increasing the pressure of the HFO, the pressure and thus boiling point of impurities contained in the HFO can also increase, thereby preventing evaporation of the impurities. For example, pressurizing HFO to about 7 bar can prevent water contained in the HFO from evaporating even when the HFO is heated to about 130°C since the water has a boiling point of about 170°C.

In this embodiment, the fuel oil circulating through the circulation unit 200 is supplied to the engine E to be used as fuel and the fuel oil remaining after use in the engine E is discharged from the engine E to be recirculated through the circulation unit 200. The supply unit 100 supplies the same amount of fuel oil as that consumed by the engine E to the circulation unit 200 such that a flow rate of the fuel oil circulating through the circulation unit 200 can be constant on average. In this embodiment, the flow rate of the fuel oil circulating through the circulation unit 200 preferably corresponds to about three times a maximum fuel consumption of the engine E.

In this embodiment, the first temperature sensor 241 measures the temperature of the fuel oil to be supplied to the engine E and a temperature value of the fuel oil measured by the first temperature sensor 241 is transmitted to a ratio calculation unit 310.

In this embodiment, the viscosity sensor 230 measures the viscosity of the fuel oil to be supplied to the engine E and a viscosity value of the fuel oil measured by the viscosity sensor 230 is transmitted to the ratio calculation unit 310.

In this embodiment, the circulation unit 200 may further include a heater 220 heating the fuel oil circulating through the circulation unit 200. In this embodiment, when the viscosity of the fuel oil circulating through the circulation unit 200 is higher than a viscosity level required by the engine E, the heater 220 heats the fuel oil to reduce the viscosity of the fuel oil. In this embodiment, the heater 220 may use steam or electricity as a heating source. When the heater 220 uses steam as a heating source, the heater 220 may be connected to a steam control valve V52 regulating the flow rate and on-off of steam.

The engine E may require a viscosity level of about 10 cSt to 25 cSt, wherein 1 cSt = 1 mm$^2$/s. Although, in general, HFO needs to be heated to meet the viscosity level required by the engine E, MGO or MDO often meets the viscosity level required by the engine E without any additional heating process. Accordingly, in this embodiment, the heater 220 is used particularly when the engine E uses only HFO as fuel or when the engine uses a mixture of HFO and a different type of fuel oil as fuel.

In this embodiment, the circulation unit 200 may further include a second valve V32 connected in parallel to the heater 220. The second valve V32 is opened when the fuel oil does not need to be heated by the heater 220 and thus bypasses the heater 220. For example, MGO and MDO have low viscosity and thus may not be heated by the heater 220.

In this embodiment, the circulation unit 200 may further include a cooler 250 cooling the fuel oil circulating through the circulation unit 200. In this embodiment, when the viscosity of the fuel oil circulating through the circulation unit 200 is below the viscosity level required by the engine E, the cooler 250 cools the fuel oil to increase the viscosity of the fuel oil. The cooler 250 may cool the fuel oil using cooling water or the like as a refrigerant, wherein the ship fuel oil switching system according to this embodiment may include a separate cooling device lowering the temperature of the refrigerant. Particularly, MGO needs to be increased in viscosity by being cooled by the cooler 250 before being supplied to the engine E since the engine E may require a viscosity level of about 10 cSt to 25 cSt.

In this embodiment, a three-way valve V60 may be disposed on a line through which the fuel oil supplied from the supply unit 100 to the circulation unit 200 is delivered to the cooler 250. The three-way valve V60 may divide the fuel oil into two streams: one stream to be sent to the cooler 250 and the other stream to be sent directly to the engine, bypassing the cooler 250.

In this embodiment, on a line through which a fuel oil stream branched off by the three-way valve V60 is sent to the cooler 250, a third valve V33 may be disposed to control the flow rate and on-off of the fuel oil stream. In addition, on a line through which the fuel oil stream cooled by the cooler 250 is discharged from the cooler 250, a third check valve V23 may be disposed to prevent backflow of the fuel oil stream.

In this embodiment, the fuel oil stream cooled by the cooler 250 and having been discharged from the cooler 250 may be sent to the engine E after joining the other fuel oil stream branched off by the three-way valve V60 and having bypassed the cooler 250.

In this embodiment, the circulation unit 200 may further include a fuel oil duct 240 disposed downstream of the engine E to temporarily store the fuel oil remaining after use in the engine E and to supply the remaining fuel oil to the circulation pump 210.

In this embodiment, the controller 300 includes the ratio calculation unit 310 and the integrated automation system 320 and controls the supply unit 100 and the circulation unit 200.

In this embodiment, the ratio calculation unit 310 calculates a blended ratio of different types of fuel oils in the fuel oil circulating through the circulation unit 200. A process of calculating the blended ratio by the ratio calculation unit 310 is as follows:

First, a temperature-dependent viscosity of each component contained in a fuel oil blend may be found according to the equations described further below. For single-component fuel oil, viscosity may be found directly according to the following equation. In this equation, v denotes viscosity and T denotes temperature.

<Equation 1>

$$\log(\log(v + 0.7)) = X - \{Y \times \log(T + 273.15)\}$$

In Equation 1, X and Y are values depending on the type of fuel oil and are found according to the following equation. In this equation, V1 denotes a viscosity at a fuel oil temperature of T1 and V2 is a viscosity at a fuel oil temperature of T2.

<Equation 2>

$$X = \log(\log(V2 + 0.7)) + B \times \log(T2)$$

$$Y = \{\log(\log(V2 + 0.7)) - \log(\log(V1 + 0.7))\} / \{\log(T1) - \log(T2)\}$$

In addition, the viscosity (v_blend) of a fuel oil blend may be found by the following method:
First, a viscosity blending index (VBI) of each component contained in the fuel oil blend is found according to the following equation. In this equation, v denotes a viscosity in cSt of each component.

<Equation 3>

$$VBI = 14.534 \times \ln(\ln(v + 0.8)) + 10.975$$

Next, a viscosity blending index (VBI_blend) of the fuel oil blend is found according to the following equation. In this equation, w_A denotes a weight proportion of component A in the fuel oil blend and VBI_A is a viscosity blending index of component A found in the first step. Here, the weight proportion w of each component is determined at a given temperature.

<Equation 4>

$$VBI\_blend = (w\_A \times VBI\_A) + (w\_B \times VBI\_B) + \ldots\ldots$$

For a fuel oil blend including two types of fuel oils, the viscosity blending index may be expressed as follows:

<Equation 5>

$$VBI\_blend = (w\_A \times VBI\_A) + (w\_B \times VBI\_B)$$

$$VBI\_blend = ((1 - w\_B) \times VBI\_A) + (w\_B \times VBI\_B) \; (\because \; w\_A + w\_B = 1)$$

On the other hand, a viscosity (v_blend) of the fuel oil blend may be expressed as follows:

<Equation 6>

$$v\_blend = \exp[\exp\{(VBI\_blend - 10.975) \div 14.534\}] - 0.8$$

$$v\_blend + 0.8 = \exp[\exp\{(VBI\_blend - 10.975) \div 14.534\}]$$

$$\ln(v\_blend + 0.8) = \exp\{(VBI\_blend - 10.975) \div 14.534\}$$

$$\ln\{\ln(v\_blend + 0.8)\} = (VBI\_blend - 10.975) \div 14.534$$

$$\ln\{\ln(v\_blend + 0.8)\} \times 14.534 = VBI\_blend - 10.975$$

$$\ln\{\ln(v\_blend + 0.8)\} \times 14.534 + 10.975 = VBI\_blend$$

For example, when the temperature of a fuel oil blend in which HFO and MGO are mixed at a weight ratio of 1:1 is 47.6°C, the viscosity of the fuel oil blend is found as follows. MGO has a viscosity of 2.85 cSt at 47.6°C and HFO has a viscosity of 245.02 cSt at 47.6°C. In the following, v_MGO denotes a viscosity of MGO and v_HFO denotes a viscosity of HFO.

$$VBI\_MGO = 14.534 \times \ln(\ln(v\_MGO + 0.8)) + 10.975$$

$$= 14.534 \times \ln(\ln(2.85 + 0.8)) + 10.975 = 14.7291$$

$$VBI\_HFO = 14.534 \times \ln(\ln(v\_HFO + 0.8)) + 10.975$$

$$= 14.534 \times \ln(\ln(245.02 + 0.8)) + 10.975 = 35.7659$$

$$VBI\_blend = (0.5 \times VBI\_MGO) + (0.5 \times VBI\_HFO)$$

$$= (0.5 \times 14.7291) + (0.5 \times 35.7659) = 25.2475$$

$$\therefore \quad v\_blend = \{\exp(\exp(VBI\_blend - 10.975) \div 14.534\} - 0.8$$

$$= \{\exp(\exp(25.2475 - 10.975) \div 14.534\} - 0.8$$

$$= 13.6373 \text{ cSt}$$

Therefore, w_B may be found by concatenating Equation 5 and Equation 6 as follows, thereby finding a weight ratio of the components in the fuel oil blend.

<Equation 7>

$$\ln\{\ln(v\_blend + 0.8)\} \times 14.534 + 10.975 = VBI\_blend$$

ln{ln(v_blend + 0.8)} × 14.534 + 10.975 = ((1 - w_B) × VBI_A) + (w_B × VBI_B) (∵ VBI_blend = ((1 - w_B) × VBI_A) + (w_B × VBI_B))

ln{ln(v_blend + 0.8)} × 14.534 + 10.975 = VBI_A - (w_B × VBI_A) + (w_B × VBI_B)

ln{ln(v_blend + 0.8)} × 14.534 + 10.975 = VBI_A + w_B × (VBI_B - VBI_A)

ln{ln(v_blend + 0.8)} × 14.534 + 10.975 - VBI_A = w_B × (VBI_B - VBI_A) ∴ w_B = [ln{ln(v_blend + 0.8)} × 14.534 + 10.975 - VBI_A] / (VBI_B - VBI_A)

The ratio calculation process by the ratio calculation unit 310 includes the following steps:
In a first step, the temperature of a fuel oil blend flowing through a pipe is determined by the temperature sensor 241 and the viscosity of the fuel oil blend is determined by the viscosity sensor 230.

In a second step, the viscosity v of each component at the temperature T determined by the temperature sensor 241 in the first step is found using Equation 1.

In a third step, the viscosity blending index VBI of each component is found using the viscosity v found in the second step and Equation 3.

In a fourth step, the viscosity blending index (VBI_Blend) of the fuel oil blend is found using the viscosity blending index (VBI_A, VBI_B) of each component found in the third step and Equation 5.

In a fifth step, the weight proportion (w_A, w_B) of each component is found using the viscosity blending index (VBI_blend) of the fuel oil blend found in the fourth step and Equation 6 regarding the viscosity (v_blend) of the fuel oil blend. The viscosity determined by the viscosity sensor 230 in the first step represents the viscosity (v_blend) of the fuel oil blend.

When the weight proportion of each component of the fuel oil blend is found in the fifth step, the blended ratio of the components of the fuel oil blend can be determined.

In this embodiment, the integrated automation system 320 may receive feedback on control over the blended ratio of the fuel oil through regulation of the opening rates of the plurality of control valves V11, V12, based on a value of the blended ratio calculated by the ratio calculation unit 310.

In this embodiment, from the ratio calculation unit 310, the integrated automation system 320 receives a value of the blended ratio of the fuel oil calculated by the ratio calculation unit 310, a value of the temperature of the fuel oil transmitted from the first temperature sensor 241 to the ratio calculation unit 310, and a value of the viscosity of the fuel oil transmitted from the viscosity sensor 230 to the ratio calculation unit 310. In addition, in this embodiment, the integrated automation system 320 may receive a value of the flow rate measured by the first flow meter 120.

In this embodiment, the integrated automation system 320 regulates the temperature and blended ratio of the fuel oil such that the viscosity value of the fuel oil received from the ratio calculation unit 310 meets a viscosity level required by the engine E. In addition, the integrated automation system 320 receives feedback on the regulated temperature of the fuel oil based on the temperature value measured by the first temperature sensor 241 and received from the ratio calculation unit 310 and receives feedback on the regulated blended ratio of the fuel oil based on the viscosity value measured by the viscosity sensor 230 and received from the ratio calculation unit 310.

In this embodiment, the integrated automation system 320 regulates the blended ratio of the fuel oil by controlling the opening rates of the plurality of control valves V11, V12. For example, when the circulation unit 200 according to this embodiment includes the steam control valve V52, the integrated automation system 320 regulates the degree of heating of the fuel oil by regulating the opening rate of the steam control valve V52. For example, when the circulation unit 200 according to this embodiment includes the cooler 250 and the three-way valve V60, the integrated automation system 320 regulates the degree of cooling of the fuel oil by regulating the opening rate of the three-way valve V60.

The ship fuel oil switching system according to this embodiment may further include a steam tracing valve V51, wherein the opening rate of the steam tracing valve V51 may be regulated by the integrated automation system 320 according to this embodiment.

In this embodiment, the steam tracing valve V51 is used to heat HFO which cannot be delivered through a pipe due to temperature drop caused by long-term shutdown of the system. Generally, the steam tracing valve V51 is not used for MGO or MDO.

Next, a method of switching fuel for the engine E from HFO alone to MGO will be described assuming that the ship fuel oil switching system according to this embodiment includes the first tank T1 storing MGO, the second tank T2 storing HFO, the cooler 250, the third valve V33, and the three-way valve V60 and a maximum viscosity level required by the engine E is 25 cSt.

When only HFO is supplied as fuel for the engine E, the first control valve V11 is fully closed (opening degree: 0%) and only the second control valve V12 is open (opening degree: 100%). When only HFO is supplied as fuel for the engine E, the viscosity of the fuel oil supplied to the engine E, automatically set by the fuel oil switching system according to this embodiment, may be 15 cSt.

When there is a need to change over fuel for the engine E from HFO to MGO, such as when a ship will enter a sulfur oxide emission control area, a user sends a signal for change over fuel for the engine E from HFO to MGO to the ship fuel oil switching system according to this embodiment.

Upon receiving the signal for change over fuel for the engine E from HFO to MGO, the fuel oil switching system according to this embodiment may automatically set the viscosity of fuel oil to be supplied to the engine E to 23 cSt, which is slightly lower than the maximum viscosity level required by the engine E.

Since the set viscosity is increased from 15 cSt to 23 cSt, load of the heater 220, which serves to reduce the viscosity, is adjusted to 0%, and, for example, when the circulation unit 200 according to this embodiment includes the steam control valve V52, the integrated automation system 320 fully closes the steam control valve V52. A temperature drop of the fuel oil can cause increase in the viscosity of the fuel oil. Accordingly, when the temperature of the fuel oil drops, the heater 220 may be operated to prevent the viscosity of the fuel oil from exceeding the set value and the integrated automation system 320 may open the steam control valve V52.

Upon receiving the signal for change over fuel for the engine E from HFO to MGO, the fuel oil switching system according to this embodiment gradually opens the first control valve V11 having been fully closed (0%) while keeping the second control valve V12 open (100%). Here, the first control valve V11 may be gradually opened through feedback control.

As used herein, the term "feedback control" refers to a control method in which some of controlled output signals from a system are returned to an input side of the system to generate an operating control signal based on a difference between the output signals and a target value or a reference value. Here, a signal path for feedback control forms a closed loop.

In addition, a rate of opening the first control valve V11 may be determined depending on the temperature change per minute (dT/dt, where T is temperature and t is time) of the fuel oil as measured by the first temperature sensor 241. For example, the first control valve V11 may be controlled by the integrated automation system 320 to be gradually opened such that the temperature of the fuel oil as measured by the first temperature sensor 241 is changed at a rate of 2°C/min.

When the first control valve V11 is fully opened (100%), the fuel oil switching system according to this embodiment gradually closes the second control valve V12 having been fully open (100%). The second control valve V12 may be gradually closed by feedback control. A rate of closing the second control valve V12 may be determined depending on the temperature change (dT/dt) per minute of the fuel oil as measured by the first temperature sensor 241. For example, the second control valve V12 may be controlled by the integrated automation system 320 to be gradually closed such that the temperature of the fuel oil as measured by the first temperature sensor 241 is changed at a rate of 2°C/min.

For example, for fuel oil change-over from HFO to MGO, it is required that HFO at 130°C be changed over with MGO at 40°C. That is, the proportion of MGO needs to be gradually increased such that the temperature of the fuel oil is 40°C when the proportion of MGO reaches 100%.

Since it takes 45 minutes to lower the temperature of the fuel oil by 90°C at a rate of temperature change of 2°C/min, it is required that the proportion of MGO be increased from 0% to 100% for 45 minutes and the proportion of HFO be decreased from 100% to 0% for 45 minutes. Therefore, the following equation is satisfied: Increment of MGO = Decrement of HFO = 100 ÷ 45 = 2.22%.

In this embodiment, the opening rates of the first control valve V11 and the second control valve V12 may be adjusted based on the increment of MGO and the decrement of HFO determined through the above calculation process.

If the rate of temperature change exceeds 2°C/min during control, the feedback control is interrupted and is not resumed until the rate of temperature change becomes 2°C/min. In addition, when the viscosity of the fuel oil increases, the heater 220 is operated to prevent the viscosity of the fuel oil from exceeding a maximum allowable viscosity value.

When the second control valve V12 is fully closed (0%), only the first control valve V11 is fully open (100%) and the supply unit 100 supplies only MGO to the circulation unit 200.

In this embodiment, when the proportion of MGO in the fuel oil blend as calculated by the ratio calculation unit 310 is 96% or more, the fuel oil switching system may determine that fuel oil change over has been completed. Upon determining that fuel oil change over has been completed and MGO is thus supplied to the engine E, the viscosity of the fuel oil to be supplied to the engine E may be automatically set to 6 cSt by the fuel oil switching system according to this embodiment.

In addition, upon determining that fuel oil change over has been completed and MGO is thus supplied to the engine E, the fuel oil switching system according to this embodiment may open the three-way valve V60 and the third valve V33 to send MGO to the cooler 250 to adjust the viscosity of MGO circulating through the circulation unit 200 to a viscosity level required by the engine E.

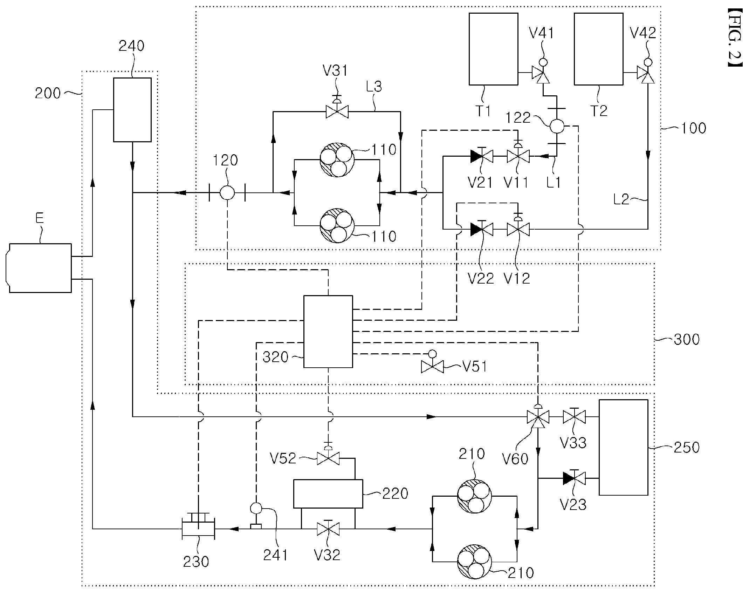

FIG. 2 is a schematic diagram of a ship fuel oil switching system according to a second exemplary embodiment which is not part of the present invention.

A ship fuel oil switching system according to the second embodiment as shown in FIG. 2 differs from the ship fuel oil switching system according to the first embodiment as shown in FIG. 1 in that the ratio calculation unit 310 is omitted and a second flow meter 122 is further included, and the differences will be mainly described below. In addition, detailed description of the same components as those of the ship fuel oil switching system according to the first embodiment described above will be omitted.

Referring to FIG. 2, the ship fuel oil switching system according to this embodiment includes a supply unit 100, a circulation unit 200, and a controller 300, as in the first embodiment.

In this embodiment, the supply unit 100 includes a plurality of tanks T1, T2, a plurality of control valves V11, V12, and a supply pump 110 and sends fuel oil stored in the plurality of tanks T1, T2 to the circulation unit 200, as in the first embodiment.

In this embodiment, the plurality of tanks T1, T2 stores different types of fuel oils and may each be any one of an HFO service tank, an HFO settling tank, an HFO bunker tank, an MDO service tank, an MDO storage tank, an MGO service tank, and an MGO storage tank, as in the first embodiment.

As in the first embodiment, emergency shutoff valves V41, V42 may be disposed on respective discharge lines L1, L2 through which the different types of fuel oils are discharged from the plurality of tanks T1, T2. In this embodiment, the emergency shutoff valves V41, V42 are on-off controlled by pneumatic or hydraulic pressure and serve to shutoff supply of fuel oil when a fire occurs to prevent the fire from spreading, as in the first embodiment.

Also in this embodiment, as in the first embodiment, the present invention will be described assuming that the supply unit includes two tanks T1, T2, wherein a first tank T1 stores MGO and a second tank T2 stores HFO.

In this embodiment, the plurality of control valves V11, V12 is respectively disposed on the plurality of discharge lines L1, L2 through which the different types of fuel oils are discharged from the plurality of tanks T1, T2, as in the first embodiment. For example, when the supply unit includes two tanks T1, T2, a first control valve V11 is disposed on a first discharge line L1 through which a first type of fuel oil is discharged from the first tank T1 and a second control valve V12 is disposed on a second discharge line L2 through which a second type of fuel oil is discharged from the second tank T2, as in the first embodiment.

In this embodiment, the plurality of control valves V11, V12 is controlled in opening rate by an integrated automation system (IAS) 320 of the controller 300 described below to regulate respective flow rates of the different types of fuel oils supplied from the plurality of tanks T1, T2 to the supply pump 110. In addition, in this embodiment, the plurality of control valves V11, V12 may be configured to be automatically controlled in opening rate by the integrated automation system 320 in ordinary times and to be manually operated in an emergency, as in the first embodiment.

In this embodiment, the supply pump 110 increases the pressure of fuel oil from the plurality of tanks T1, T2 to supply the fuel oil to the circulation unit 200 and may include a plurality of supply pumps connected in parallel. The different types of fuel oils respectively discharged from the plurality of tanks T1, T2 are mixed together before being supplied to the supply pump 110, as in the first embodiment.

For example, when the supply unit according to this embodiment includes the first tank T1 storing MGO and the second tank T2 storing HFO, the first discharge line L1 delivering MGO discharged from the first tank T1 to the supply pump 110 and a second discharge line L2 delivering HFO discharged from the second tank T2 to the supply pump 110 join each other upstream of the supply pump 110, such that MGO discharged from the first tank T1 and HFO discharged from the second tank T2 are mixed together upstream of the supply pump 110 before being supplied to the supply pump 110, as in the first embodiment.

In this embodiment, the supply unit 100 may further include a return line L3 branching off downstream of the supply pump 110 and joining upstream of the supply pump 110, as in the first embodiment. In this embodiment, the fuel oil compressed by the supply pump 110 in excess of what is required by an engine E is delivered upstream of the supply pump 110 through the return line L3, as in the first embodiment. As in the first embodiment, a first valve V31 controlling the flow rate and on-off of a fluid may be disposed on the return line L3.

However, unlike in the first embodiment, the supply unit 100 according to this embodiment may further include a second flow meter 122 disposed on all or some of the plurality of discharge lines L1, L2 through which the different types of fuel oils are discharged from the plurality of tanks T1, T2, in addition to a first flow meter disposed downstream of the supply pump 110.

In this embodiment, the first flow meter 120 measures the flow rate of fuel oil that is a blend of the different types of fuel oils discharged from the plurality of tanks T1, T2 to be supplied to the circulation unit 200 by the supply pump 110, as in the first embodiment.

In this embodiment, the ship fuel oil switching system is operated such that the first flow meter 120 indicates a flow rate equal to a fuel oil consumption per hour of the engine E. Accordingly, if the flow rate indicated by the first flow meter 120 is below or above the fuel oil consumption per hour of the engine E, it can be determined that the system has failed.

In this embodiment, the second flow meter 122 measures the flow rate of fuel oil discharged from the tank T1 or T2 upstream of the discharge line L1 or L2 on which the second flow meter 122 is disposed. Since the first flow meter 120 measures the flow rate of the fuel oil that is a blend of the different types of fuel oils discharged from the plurality of tanks T1, T2 to be supplied to the circulation unit 200, the flow rate of fuel oil discharged from one tank T1 or T2 can be found by subtracting a value of the flow rate of fuel oil discharged from the other tank as measured by the second flow meter 122 from a value of the flow rate measured by the first flow meter 120.

For example, when the supply unit according to this embodiment includes a first tank T1 storing MGO and a second tank T2 storing HFO, the second flow meter 122 may be disposed on the first discharge line L1 to measure the flow rate of MGO discharged from the first tank T1, as shown in FIG. 2. Since the flow rate of HFO discharged from the second tank T2 can be found by subtracting the flow rate value measured by the second flow meter 122 from the flow rate value measured by the first flow meter 120, the blended ratio of MGO to HFO can be determined.

In addition, the time t required for completion of fuel oil change over can be calculated using the flow rate value measured by the first flow meter 120, the flow rate value measured by the second flow meter 122, and the following equation. In this equation, Y denotes the amount of fuel oil to be changed over, V denotes the sum of the total volume of pipes through which fuel oil is circulated and the internal volumes of the aforementioned components, Y0 denotes the initial amount of fuel oil (to be changed over) in a fuel oil blend at the start of fuel oil change over, FOC denotes the amount of fuel oil consumed by the engine per unit time, and t denotes the elapsed time. Here, FOC may be determined based on a variation of the flow rate value measured by the first flow meter 120.

<Equation 8>

$$Y = V + (Y0 - V) \times \exp(-FOC \times t \div V)$$

For example, when HFO is changed over with MGO, Y represents the amount of HFO to be changed over and Y0 represents the initial amount of HFO at the start of fuel oil change over, which may generally be equal to zero. In addition, if the proportion of MGO reaches 96% or more, it can be determined that fuel oil change over is completed, and a value of t at a point in time when the proportion of MGO reaches 96% or more is the time required for completion of fuel oil change over.

In this embodiment, the flow rate value measured by the first flow meter 120 and the flow rate value measured by the second flow meter 122 are transmitted to the integrated automation system 320.

In this embodiment, the supply unit 100 may further include a plurality of check valves V21, V22 respectively disposed on the plurality of discharge lines L1, L2 through which the different types of fuel oils are discharged from the plurality of tanks T1, T2, as in the first embodiment. For example, when the supply unit according to this embodiment includes two tanks T1, T2, a first check valve V21 is disposed on the first discharge line L1 through which a first type of fuel oil is discharged from the first tank T1 and a second check line V2 is disposed on the second discharge line L2 through which a second type of fuel oil is discharged from the second tank T2, as in the first embodiment.

In this embodiment, the plurality of check valves V21, V22 serves to prevent fuel oil discharged from one tank from flowing into the other tank, thereby preventing different types of fuel oils from being mixed in each of the tanks T1, T2, as in the first embodiment.

In this embodiment, the circulation unit 200 includes a circulation pump 210, a first temperature sensor 241, and a viscosity sensor 230 and circulates fuel oil received from the supply unit 100 to supply the fuel oil to the engine E, as in the first embodiment.

In this embodiment, the circulation pump 210 increases the pressure of the fuel oil supplied from the supply unit 100 to the circulation unit 200 to circulate the fuel oil and may include a plurality of circulation pumps connected in parallel, as in the first embodiment. In this embodiment, the circulation unit 200 is preferably maintained at a pressure of about 8 bar to about 10 bar by being pressurized by the circulation pump 210.

In the ship fuel oil switching system according to this embodiment, since heating of HFO is performed after increasing the pressure of the HFO, as in the first embodiment, the pressure and thus boiling point of impurities contained in the HFO can also become higher, thereby preventing evaporation of the impurities.

In this embodiment, fuel oil circulating through the circulation unit 200 is supplied to the engine E to be used as fuel and the fuel oil remaining after use in the engine E is discharged from the engine E to be recirculated through the circulation unit 200, as in the first embodiment. The supply unit 100 resupplies the same amount of fuel oil as that consumed by the engine E to the circulation unit 200 such that a flow rate of the fuel oil circulating through the circulation unit 200 can be constant on average. In this embodiment, the flow rate of the fuel oil circulating through the circulation unit 200 preferably corresponds to about three times the maximum fuel consumption of the engine E, as in the first embodiment.

In this embodiment, the first temperature sensor 241 measures the temperature of fuel oil to be supplied to the engine E. However, the temperature value of the fuel oil measured by the first temperature sensor 241 is transmitted to the integrated automation system 320, unlike in the first embodiment.

In this embodiment, the viscosity sensor 230 measures the viscosity of fuel oil to be supplied to the engine E. However, the viscosity value of the fuel oil measured by the viscosity sensor 230 is transmitted to the integrated automation system 320, unlike in the first embodiment.

In this embodiment, the circulation unit 200 may further include a heater 220 heating the fuel oil circulating through the circulation unit 200, as in the first embodiment. In this embodiment, when the viscosity of the fuel oil circulating through the circulation unit 200 is above a viscosity level required by the engine E, the heater 220 heats the fuel oil to reduce the viscosity of the fuel oil. As in the first embodiment, the heater 220 may use steam or electricity as a heating source. For example, when the heater 220 uses steam as a heating source, the heater 220 may be connected to a steam control valve V52 regulating the flow rate and on-off of steam, as in the first embodiment.

In this embodiment, the heater 220 is used particularly when the engine E uses only HFO as fuel or when the engine uses a fuel oil blend of HFO and a different type of fuel oil as fuel.

In this embodiment, the circulation unit 200 may further include a second valve V32 connected in parallel to the heater 220, as in the first embodiment. The second valve V32 is opened when fuel oil does not need to be heated by the heater 220 and thus bypasses the heater 220. For example, MGO and MDO have low viscosity and thus may not be heated by the heater 220.

In this embodiment, the circulation unit 200 may further include a cooler 250 cooling the fuel oil circulating through the circulation unit 200, as in the first embodiment. In this embodiment, when the viscosity of the fuel oil circulating through the circulation unit 200 is below the viscosity level required by the engine E, the cooler 250 cools the fuel oil to increase the viscosity of the fuel oil, as in the first embodiment. Particularly, MGO needs to be increased in viscosity by being cooled by the cooler 250 before being supplied to the engine E.

In this embodiment, the cooler 250 may cool the fuel oil using cooling water or the like as a refrigerant, wherein the ship fuel oil switching system according to this embodiment may include a separate cooling device lowering the temperature of the refrigerant, as in the first embodiment.

In this embodiment, a three-way valve V60 may be disposed on a line through which fuel oil supplied from the supply unit 100 to the circulation unit 200 is delivered to the cooler 250, as in the first embodiment. The three-way valve V60 may divide the fuel oil into two streams: one stream to be sent to the cooler 250 and the other stream to be sent directly to the engine E, bypassing the cooler 250.

In this embodiment, on a line through which a fuel oil stream branched off by the three-way valve V60 is sent to the cooler 250, a third valve V33 may be disposed to control the flow rate and on-off of the fuel oil stream, as in the first

**EP 3 546 338 B1**

embodiment. In addition, on a line through which the fuel oil stream cooled by the cooler 250 is discharged from the cooler 250, a third check valve V23 may be disposed to prevent backflow of the fuel oil stream, as in the first embodiment.

In this embodiment, the fuel oil stream cooled by the cooler 250 and having been discharged from the cooler 250 may be sent to the engine E after joining the other fuel oil stream branched off by the three-way valve V60 and having bypassed the cooler 250, as in the first embodiment.

In this embodiment, the circulation unit 200 may further include a fuel oil duct 240 disposed downstream of the engine E to temporarily store the fuel oil remaining after use in the engine E and to supply the remaining fuel oil to the circulation pump 210, as in the first embodiment.

In this embodiment, the controller 300 includes the integrated automation system 320 and controls the supply unit 100 and the circulation unit 200, as in the first embodiment.

However, the controller 300 according to this embodiment does not include the ratio calculation unit 310, unlike in the first embodiment, and the ship fuel oil switching system according to this embodiment calculates the blended ratio of the fuel oil using the flow rate values measured by the first flow meter 120 and the second flow meter 122.

In this embodiment, the integrated automation system 320 receives the flow rate value measured by the first flow meter, the flow rate value measured by the second flow meter 122, the temperature value measured by the first temperature sensor 241, and the viscosity value measured by the viscosity sensor 230.

In this embodiment, the integrated automation system 320 calculates the blended ratio of the fuel oil to be supplied to the engine E using the flow rate value measured by the first flow meter 120 and the flow rate value measured by the second flow meter 122.

In addition, the integrated automation system 320 according to this embodiment regulates the temperature and blended ratio of the fuel oil such that the viscosity value of the fuel oil received from the viscosity sensor 230 meets a viscosity level required by the engine E. The integrated automation system 320 receives feedback on the regulated temperature of the fuel oil based on the temperature value received from the first temperature sensor 241 and receives feedback on the regulated blended ratio of the fuel oil based on the viscosity value received from the viscosity sensor 230.

In this embodiment, the integrated automation system 320 regulates the blended ratio of the fuel oil by controlling the opening rates of the plurality of control valves V11, V12, as in the first embodiment. For example, when the circulation unit 200 according to this embodiment includes the steam control valve V52, the integrated automation system 320 regulates a degree of heating of the fuel oil by regulating the opening rate of the steam control valve V52. For example, when the circulation unit 200 according to this embodiment includes the cooler 250 and the three-way valve V60, the integrated automation system 320 regulates a degree of cooling of the fuel oil by regulating the opening rate of the three-way valve V60.

As in the first embodiment, the ship fuel oil switching system according to this embodiment may further include a steam tracing valve V51, wherein the opening rate of the steam tracing valve V51 may be regulated by the integrated automation system 320 according to this embodiment.

As in the first embodiment, the steam tracing valve V51 according to this embodiment is used to heat HFO that cannot be delivered through pipes due to temperature drop caused by long-term shutdown of the system. Generally, the steam tracing valve V51 is not used for MGO or MDO.

For example, when the ship fuel oil switching system according to this embodiment includes the first tank T1 storing MGO, the second tank T2 storing HFO, the cooler 250, the third valve V33, and the three-way valve V60 and a maximum viscosity required by the engine E is 25 cSt, a method of switching fuel for the engine E from HFO alone to MGO is the same as described in the first embodiment.

However, in this embodiment, it is determined that fuel oil change over is completed when the second control valve is fully closed (0%) and the proportion of the first type of fuel oil determined using the flow rate value transmitted by the first flow meter and the flow rate value transmitted by the second flow meter is more than or equal to a predetermined value.

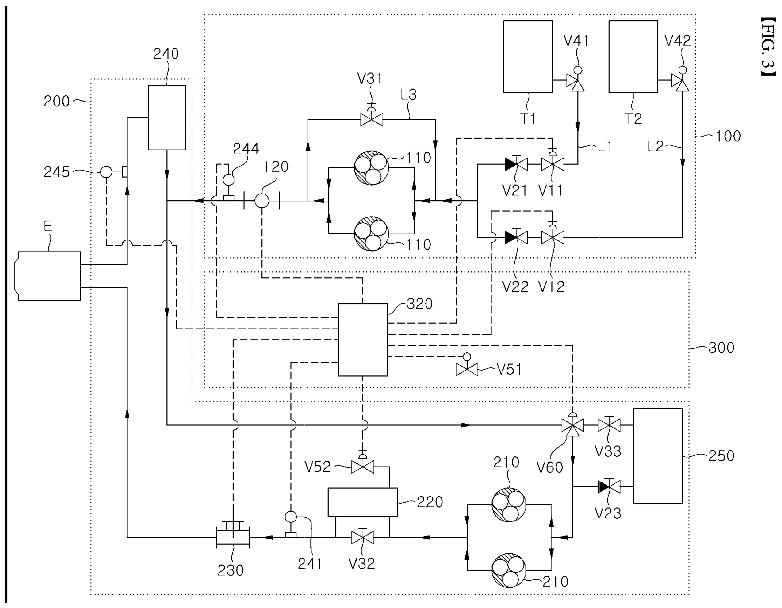

FIG. 3 is a schematic diagram of a ship fuel oil switching system according to a third exemplary embodiment which is not part of the present invention.

A ship fuel oil switching system according to the third embodiment as shown in FIG. 3 differs from the ship fuel oil switching system according to the first embodiment as shown in FIG. 1 in that the ratio calculation unit 310 is omitted and a second temperature sensor 244 and a third temperature sensor are further included, and the differences will be mainly described below. In addition, detailed description of the same components as those of the ship fuel oil switching system according to the first embodiment described above will be omitted.

Referring to FIG. 3, the ship fuel oil switching system according to this embodiment includes a supply unit 100, a circulation unit 200, and a controller 300, as in the first embodiment.

In this embodiment, the supply unit 100 includes a plurality of tanks T1, T2, a plurality of control valves V11, V12, and a supply pump 110 and sends fuel oil stored in the plurality of tanks T1, T2 to the circulation unit 200, as in the first embodiment.

In this embodiment, the plurality of tanks T1, T2 stores different types of fuel oils and may each be any one of an HFO service tank, an HFO settling tank, an HFO bunker tank, an MDO service tank, an MDO storage tank, an MGO service tank, and an MGO storage tank, as in the first embodiment.

As in the first embodiment, emergency shutoff valves V41, V42 may be disposed on respective discharge lines L1, L2 through which the different types of fuel oils are discharged from the plurality of tanks T1, T2. In this embodiment, the emergency shutoff valves V41, V42 are on-off controlled by pneumatic or hydraulic pressure and serve to shutoff supply of the fuel oil when a fire occurs to prevent the fire from spreading, as in the first embodiment.

Also in this embodiment, as in the first embodiment, the present example will be described assuming that the supply unit includes two tanks T1, T2, wherein a first tank T1 stores MGO and a second tank T2 stores HFO.

In this embodiment, the plurality of control valves V11, V12 is respectively disposed on the plurality of discharge lines L1, L2 through which the different types of fuel oils are discharged from the plurality of tanks T1, T2, as in the first embodiment. For example, when the supply unit includes two tanks T1, T2, a first control valve V11 is disposed on a first discharge line L1 through which a first type of fuel oil is discharged from the first tank T1 and a second control valve V12 is disposed on a second discharge line L2 through which a second type of fuel oil is discharged from the second tank T2, as in the first embodiment.

In this embodiment, the plurality of control valves V11, V12 is controlled in opening rate by an integrated automation system (IAS) 320 of the controller 300 described below to regulate respective flow rates of the different types of fuel oils supplied from the plurality of tanks T1, T2 to the supply pump 110. In addition, in this embodiment, the plurality of control valves V11, V12 may be configured to be automatically controlled in opening rate by the integrated automation system 320 in ordinary times and to be manually operated in an emergency, as in the first embodiment.

In this embodiment, the supply pump 110 increases the pressure of fuel oil discharged from the plurality of tanks T1, T2 to supply the fuel oil to the circulation unit 200 and may include a plurality of supply pumps connected in parallel. The different types of fuel oils discharged from the plurality of tanks T1, T2 are mixed together before being supplied to the supply pump 110, as in the first embodiment.

For example, when the supply unit according to this embodiment includes the first tank T1 storing MGO and the second tank T2 storing HFO, the first discharge line L1 delivering MGO discharged from the first tank T1 to the supply pump 110 and a second discharge line L2 delivering HFO discharged from the second tank T2 to the supply pump 110 join each other upstream of the supply pump 110, such that MGO discharged from the first tank T1 and HFO discharged from the second tank T2 are mixed together upstream of the supply pump 110 before being supplied to the supply pump 110, as in the first embodiment.

In this embodiment, the supply unit 100 may further include a return line L3 branching off downstream of the supply pump 110 and joining upstream of the supply pump 110, as in the first embodiment.

In this embodiment, the fuel oil compressed by the supply pump 110 in excess of what is required by an engine E is delivered upstream of the supply pump 110 through the return line L3, as in the first embodiment. As in the first embodiment, a first valve V31 controlling the flow rate and on-off of a fluid may be disposed on the return line L3.

In this embodiment, the supply unit 100 may further include a first flow meter 120 disposed downstream of the supply pump 110, as in the first embodiment. In this embodiment, the first flow meter 120 measures the flow rate of fuel oil that is a blend of the different types of fuel oils discharged from the plurality of tanks T1, T2 to be supplied to the circulation unit 200 by the supply pump 110, as in the first embodiment.

In this embodiment, the ship fuel oil switching system is operated such that the first flow meter 120 indicates a flow rate equal to a fuel oil consumption per hour of the engine E. Accordingly, if the flow rate indicated by the first flow meter 120 is below or above the fuel oil consumption per hour of the engine E, it can be determined that the system has failed.

However, unlike in the first embodiment, the supply unit 100 according to this embodiment may further include a second temperature sensor 244 disposed downstream of the supply pump 110. In this embodiment, the second temperature sensor 244 measures the temperature of fuel oil that is a blend of the different types of fuel oils discharged from the plurality of tanks T1, T2 to be supplied to the circulation unit 200, and a value of the temperature of the fuel oil measured by the second temperature sensor is transmitted to the integrated automation system 320.

In this embodiment, the supply unit 100 may further include a plurality of check valves V21, V22 respectively disposed on the plurality of discharge lines L1, L2 through which the different types of fuel oils are discharged from the plurality of tanks T1, T2, as in the first embodiment. For example, when the supply unit according to this embodiment includes two tanks T1, T2, a first check valve V21 is disposed on the first discharge line L1 through which a first type of fuel oil is discharged from the first tank T1 and a second check line V2 is disposed on the second discharge line L2 through which a second type of fuel oil is discharged from the second tank T2, as in the first embodiment.

In this embodiment, the plurality of check valves V21, V22 serves to prevent fuel oil discharged from one tank from flowing into the other tank, thereby preventing different types of fuel oils from being mixed in each of the tanks T1, T2, as in the first embodiment.

In this embodiment, the circulation unit 200 includes a circulation pump 210, a first temperature sensor 241, and a viscosity sensor 230 and circulates fuel oil received from the supply unit 100 to supply the fuel oil to the engine E, as in the first embodiment.

In this embodiment, the circulation pump 210 increases the pressure of the fuel oil supplied from the supply unit 100 to the circulation unit 200 to circulate the fuel oil and may include a plurality of circulation pumps connected in parallel, as in the first embodiment. In this embodiment, the circulation unit 200 is preferably maintained at a pressure of about 8 bar to about 10 bar by being pressurized by the circulation pump 210.

In the ship fuel oil switching system according to this embodiment, since heating of HFO is performed after increasing the pressure of the HFO, as in the first embodiment, the pressure and thus boiling point of impurities contained in HFO can also become higher, thereby preventing evaporation of the impurities.

In this embodiment, fuel oil circulating through the circulation unit 200 is supplied to the engine E to be used as fuel and the fuel oil remaining after use in the engine E is discharged from the engine E to be recirculated through the circulation unit 200, as in the first embodiment. The supply unit 100 resupplies the same amount of fuel oil as that consumed by the engine E to the circulation unit 200 such that a flow rate of the fuel oil circulating through the circulation unit 200 can be constant on average. In this embodiment, the flow rate of the fuel oil circulating through the circulation unit 200 preferably corresponds to about three times a maximum fuel consumption of the engine E, as in the first embodiment.

In this embodiment, the first temperature sensor 241 measures the temperature of the fuel oil to be supplied to the engine E. However, the temperature value of the fuel oil measured by the first temperature sensor 241 is transmitted to the integrated automation system 320, unlike in the first embodiment.

In this embodiment, the viscosity sensor 230 measures the viscosity of the fuel oil to be supplied to the engine E. However, the viscosity value of the fuel oil measured by the viscosity sensor 230 is transmitted to the integrated automation system 320, unlike in the first embodiment.

In this embodiment, the circulation unit 200 may further include a heater 220 heating the fuel oil circulating through the circulation unit 200, as in the first embodiment. In this embodiment, when the viscosity of the fuel oil circulating through the circulation unit 200 is above a viscosity level required by the engine E, the heater 220 heats the fuel oil to reduce the viscosity of the fuel oil, as in the first embodiment. In addition, as in the first embodiment, the heater 220 may use steam or electricity as a heating source. For example, when the heater 220 uses steam as a heating source, the heater 220 may be connected to a steam control valve V52 regulating the flow rate and on-off of steam, as in the first embodiment.

In this embodiment, the heater 220 is used particularly when the engine E uses only HFO as fuel or when the engine uses a fuel oil blend of HFO and a different type of fuel oil as fuel.

In this embodiment, the circulation unit 200 may further include a second valve V32 connected in parallel to the heater 220, as in the first embodiment. The second valve V32 is opened when fuel oil does not need to be heated by the heater 220 and thus bypasses the heater 220.

In this embodiment, the circulation unit 200 may further include a cooler 250 cooling the fuel oil circulating through the circulation unit 200, as in the first embodiment. In this embodiment, when the viscosity of the fuel oil circulating through the circulation unit 200 is below the viscosity level required by the engine E, the cooler 250 cools the fuel oil to increase the viscosity of the fuel oil, as in the first embodiment. Particularly, MGO needs to be increased in viscosity by being cooled by the cooler 250 before being supplied to the engine E.

In this embodiment, the cooler 250 may cool the fuel oil using cooling water or the like as a refrigerant, wherein the ship fuel oil switching system according to this embodiment may include a separate cooling device lowering the temperature of the refrigerant, as in the first embodiment.

As in the first embodiment, a three-way valve V60 may be disposed on a line through which the fuel oil supplied from the supply unit 100 to the circulation unit 200 is delivered to the cooler 250, as in the first embodiment. The three-way valve V60 may divide the fuel oil into two streams: one stream to be sent to the cooler 250 and the other stream to be sent directly to the engine E, bypassing the cooler 250.

In this embodiment, on a line through which a fuel oil stream branched off by the three-way valve V60 is sent to the cooler 250, a third valve V33 may be disposed to control the flow rate and on-off of the fuel oil stream, as in the first embodiment. In addition, on a line through which the fuel oil stream cooled by the cooler 250 is discharged from the cooler 250, a third check valve V23 may be disposed to prevent backflow of the fuel oil stream, as in the first embodiment.

In this embodiment, the fuel oil stream cooled by the cooler 250 and having been discharged from the cooler 250 may be sent to the engine E after joining the other fuel oil stream branched off by the three-way valve V60 and having bypassed the cooler 250, as in the first embodiment.

In this embodiment, the circulation unit 200 may further include a fuel oil duct 240 disposed downstream of the engine E to temporarily store the fuel oil remaining after use in the engine E and to supply the remaining fuel oil to the circulation pump 210, as in the first embodiment.

However, unlike in the first embodiment, the circulation unit 200 according to this embodiment further includes a third temperature sensor 245 measuring the temperature of the fuel oil remaining after use in the engine E. A value of the temperature of the fuel oil measured by the third temperature sensor 245 is transmitted to the integrated automation system 320.

In this embodiment, the controller 300 includes the integrated automation system 320 and controls the supply unit 100 and the circulation unit 200, as in the first embodiment. However, the controller 300 according to this embodiment does not include the ratio calculation unit 310, unlike in the first embodiment.

In this embodiment, the integrated automation system 320 receives the temperature value measured by the first temperature sensor 241, the temperature value measured by the second temperature sensor 244, the temperature value measured by the third temperature sensor 245, and the viscosity value measured by the viscosity sensor 230.

In this embodiment, the integrated automation system 320 regulates the temperature and blended ratio of the fuel oil such that the viscosity value of the fuel oil received from the viscosity sensor 230 meets a viscosity level required by the engine E. The integrated automation system 320 receives feedback on the regulated temperature of the fuel oil based on the temperature value of the fuel oil received from the first temperature sensor 241 and receives feedback on the regulated blended ratio of the fuel oil based on the viscosity value of the fuel oil received from the viscosity sensor 230.

In this embodiment, the integrated automation system 320 regulates the blended ratio of the fuel oil by controlling the opening rates of the plurality of control valves V11, V12. For example, when the circulation unit 200 according to this embodiment includes the steam control valve V52, the integrated automation system 320 regulates a degree of heating of the fuel oil by regulating the opening rate of the steam control valve V52. For example, when the circulation unit 200 according to this embodiment includes the cooler 250 and the three-way valve V60, the integrated automation system 320 regulates a degree of cooling of the fuel oil by regulating the opening rate of the three-way valve V60.

However, in this embodiment, the integrated automation system 320 may adjust the temperature of the fuel oil measured by the first temperature sensor 241 to a preset value. Here, the preset value for the first temperature sensor 241 may be calculated using the following equation. In this equation, T1 denotes the preset value for the first temperature sensor 241, Q1 denotes the flow rate value of the fuel oil measured by the first flow meter 120, T2 denotes the temperature of the fuel oil measured by the second temperature sensor 244, Q2 is the amount of the fuel oil remaining after use in the engine E and discharged from the engine E, T3 denotes the temperature of the fuel oil measured by the third temperature sensor 245, and Q3 is the capacity of the circulation pump 210. In addition, 2 means that a required rate of change in temperature of the fuel oil is 2°C/min.

$$<\text{Equation 9}>$$

$$T1 \times Q1 + T2 \times Q2 = (T3 - 2) \times Q3$$

$$T1 \times Q1 = (T3 - 2) \times Q3 - T2 \times Q2$$

$$\therefore \ T1 = \{(T3 - 2) \times Q3 - T2 \times Q2\} \div Q1$$

In this embodiment, the ship fuel oil switching system may further include a steam tracing valve V51, wherein the opening rate of the steam tracing valve V51 may be regulated by the integrated automation system 320, as in the first embodiment.

In this embodiment, the steam tracing valve V51 is used to heat HFO that cannot be delivered through pipes due to temperature drop caused by long-term shutdown of the system. Generally, the steam tracing valve V51 is not used for MGO or MDO.

For example, when the ship fuel oil switching system according to this embodiment includes the first tank T1 storing MGO, the second tank T2 storing HFO, the cooler 250, the third valve V33, and the three-way valve V60 and a maximum viscosity level required by the engine E is 25 cSt, a method of switching fuel for the engine E from HFO alone to MGO is the same as described in the first embodiment.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the scope of the invention.

**Claims**

1. A system for switching ship fuel oil for an engine (E) between different types of fuel oils, the system comprising:

> a supply unit (100) supplying fuel oil;
> a circulation unit (200) circulating the fuel oil received from the supply unit;
> a controller (300) controlling the supply unit and the circulation unit;
> wherein:

>> the supply unit comprises a plurality of tanks (T1,T2) respectively storing the different types of fuel oils, and a first flow meter (120) measuring a flow rate of the fuel oil that is a blend of the different types of fuel oils respectively discharged from the plurality of tanks (T1, T2) to be sent to the circulation unit (200);

the engine (E) receives the fuel oil from the circulation unit (200);

the fuel oil remaining after use in the engine is recirculated through the circulation unit (200); and

the controller (300) regulates a blended ratio of the fuel oil to be sent to the engine by controlling flow rates of the different types of fuel oils discharged from the plurality of tanks,

wherein the circulation unit (200) circulates the fuel oil blend to the engine (E) and the supply unit (100) resupplies the same amount of fuel oil as that consumed by the engine (E) to the circulation unit (200), the system being operated such that the first flow meter (120) indicates a flow rate equal to a fuel oil consumption per hour of the engine (E),

wherein the supply unit (100) further comprises: a plurality of discharge lines (L1, L2) through which the respective different types of fuel oils are discharged from the plurality of tanks (T1, T2); and a plurality of control valves (V11, V12) disposed on the plurality of discharge lines, respectively, and the controller (300) regulates the blended ratio of the fuel oil by adjusting opening rates of the plurality of control valves,

wherein the controller (300) comprises a ratio calculation unit (310); the circulation unit (200) further comprises a first temperature sensor (241) measuring a temperature of the fuel oil to be supplied to the engine and a viscosity sensor (230) measuring a viscosity of the fuel oil to be supplied to the engine; a value of the temperature of the fuel oil measured by the first temperature sensor and a value of the viscosity of the fuel oil measured by the viscosity sensor are transmitted to the ratio calculation unit; and the ratio calculation unit (310) calculates a blended ratio of the different types of fuel oils in the fuel oil circulating through the circulation unit,

wherein the controller (300) further comprises an integrated automation system (320), the integrated automation system receiving: a value of the blended ratio of the fuel oil calculated by the ratio calculation unit (310); the value of the temperature of the fuel oil transmitted from the first temperature sensor (241) to the ratio calculation unit; and the value of the viscosity of the fuel oil transmitted from the viscosity sensor (230) to the ratio calculation unit, from the ratio calculation unit, and

wherein the integrated automation system (320) regulates the temperature and blended ratio of the fuel oil such that the viscosity value of the fuel oil received from the ratio calculation unit (310) meets a viscosity level required by the engine, receives feedback on the regulated temperature of the fuel oil based on the temperature value measured by the first temperature sensor (241) and received from the ratio calculation unit, and receives feedback on the regulated blended ratio of the fuel oil based on the viscosity value measured by the viscosity sensor (230) and received from the ratio calculation unit.

2. The system according to claim 1, wherein the supply unit (100) further comprises a plurality of check valves (V21,V22) disposed on the plurality of discharge lines (L1,L2), respectively.

3. The system according to claim 1, wherein the circulation unit (200) further comprises a circulation pump (210) pressurizing and circulating the fuel oil.

4. The system according to claim 3, wherein the circulation pump (210) maintains a pressure of the fuel oil circulating through the circulation unit (200) at 8 bar to 10 bar.

5. The system according to claim 1, wherein a flow rate of the fuel oil circulating through the circulation unit (200) corresponds to about three times a maximum fuel consumption of the engine (E).

6. The system according to claim 1, wherein the ratio calculation unit (310) finds a viscosity blending index (VBI) according to Equation: $VBI = 14.534 \times \ln(\ln(v+0.8))+10.975$, where v denotes a viscosity in cSt, wherein 1 cSt = 1 mm$^2$/s, of each component of the fuel oil circulating through the circulation unit and finds w_A and w_B, for a fuel oil blend including two types of fuel oils, according to Equations: $VBI\_blend = (w\_A \times VBI\_A) + (w\_B \times VBI\_B)$, where w_A and w_B respectively denote a weight proportion of components A and B in a fuel oil blend and a weight proportion w of each component is determined at a given temperature; and $v\_blend = \{\exp(\exp(VBI\_blend-10.975) \div 14.534\} - 0.8$, where v_blend denotes a viscosity of the fuel oil blend.

7. The system according to claim 1, wherein the circulation unit (200) further comprises a heater (220), and, when a viscosity of the fuel oil circulating through the circulation unit is above a viscosity level required by the engine, the heater heats the fuel oil.

8. The system according to claim 1, wherein the circulation unit further comprises a cooler (250), and, when a viscosity of the fuel oil circulating through the circulation unit is below a viscosity level required by the engine, the cooler cools the fuel oil.

9. The system according to claim 1, wherein the circulation unit (200) further comprises a fuel oil duct (240) disposed downstream of the engine (E) to temporarily store the fuel oil remaining after use in the engine.

## Patentansprüche

1. System zum Wechseln von Schiffstreiböl für einen Motor (E) zwischen verschiedenen Arten von Treibölen, das System umfassend:

   eine Zufuhreinheit (100), die Treiböl zuführt;
   eine Umwälzeinheit (200), die das von der Zufuhreinheit erhaltene Treiböl umwälzt;
   eine Steuerung (300), die die Zufuhreinheit und die Umwälzeinheit steuert; wobei:

   die Zufuhreinheit eine Vielzahl von Tanks (T1, T2), die jeweils die verschiedenen Arten von Treibölen speichern, und einen ersten Durchflussmesser (120) umfasst, der eine Durchflussrate des Treiböls misst, das eine Mischung der verschiedenen Arten von Treibölen ist, die jeweils aus der Vielzahl von Tanks (T1, T2) abgegeben werden, um zu der Umwälzeinheit (200) geleitet zu werden;
   der Motor (E) das Treiböl von der Umwälzeinheit (200) erhält;
   das nach der Verwendung im Motor verbleibende Treiböl durch die Umwälzeinheit (200) zurückgeführt wird; und
   die Steuerung (300) ein Mischungsverhältnis des an den Motor zu leitenden Treiböls regelt, indem es die Durchflussmengen der verschiedenen Arten von Treibölen steuert, die aus der Vielzahl von Tanks abgegeben werden,
   wobei die Umwälzeinheit (200) die Treibölmischung zu dem Motor (E) umwälzt und die Zufuhreinheit (100) die gleiche Menge an Treiböl, wie sie von dem Motor (E) verbraucht wird, der Umwälzeinheit (200) wieder zuführt, wobei das System betrieben wird, sodass der erste Durchflussmesser (120) eine Durchflussrate angibt, die gleich wie ein Treibölverbrauch pro Stunde des Motors (E) ist,
   wobei die Zufuhreinheit (100) ferner Folgendes umfasst: eine Vielzahl von Abgabeleitungen (L1, L2), durch die die jeweiligen unterschiedlichen Arten von Treibölen aus der Vielzahl von Tanks (T1, T2) abgegeben werden; und eine Vielzahl von Steuerventilen (V11, V12), die jeweils an der Vielzahl von Abgabeleitungen angeordnet sind, und die Steuerung (300) das Mischungsverhältnis des Treiböls durch Einstellen der Öffnungsraten der Vielzahl von Steuerventilen regelt,
   wobei die Steuerung (300) eine Verhältnisberechnungseinheit (310) umfasst; die Umwälzeinheit (200) ferner einen ersten Temperatursensor (241), der eine Temperatur des dem Motor zuzuführenden Kraftstoffs misst, und einen Viskositätssensor (230), der eine Viskosität des dem Motor zuzuführenden Kraftstoffs misst, umfasst; ein Wert der Temperatur des Treiböls, der von dem ersten Temperatursensor gemessen wird, und ein Wert der Viskosität des Treiböls, der von dem Viskositätssensor gemessen wird, an die Verhältnisberechnungseinheit übertragen werden; und die Verhältnisberechnungseinheit (310) ein Mischungsverhältnis der verschiedenen Arten von Treibölen in dem Treiböl berechnet, das durch die Umwälzeinheit zirkuliert,
   wobei die Steuerung (300) ferner ein integriertes Automatisierungssystem (320) umfasst, wobei das integrierte Automatisierungssystem Folgendes erhält: einen Wert des Mischungsverhältnisses des Treiböls, der von der Verhältnisberechnungseinheit (310) berechnet wird; den Wert der Temperatur des Treiböls, der von dem ersten Temperatursensor (241) an die Verhältnisberechnungseinheit übertragen wird; und den Wert der Viskosität des Treiböls, der von dem Viskositätssensor (230) an die Verhältnisberechnungseinheit übertragen wird, von der Verhältnisberechnungseinheit, und
   wobei das integrierte Automatisierungssystem (320) die Temperatur und das Mischungsverhältnis des Treiböls regelt, sodass der von der Verhältnisberechnungseinheit (310) erhaltene Viskositätswert des Treiböls einem von dem Motor geforderten Viskositätsgrad entspricht, eine Rückmeldung über die geregelte Temperatur des Treiböls basierend auf dem von dem ersten Temperatursensor (241) gemessenen und von der Verhältnisberechnungseinheit erhaltenen Temperaturwert erhält und eine Rückmeldung über das geregelte Mischungsverhältnis des Treiböls basierend auf dem von dem Viskositätssensor (230) gemessenen und von der Verhältnisberechnungseinheit empfangenen Viskositätswert erhält.

2. System nach Anspruch 1, wobei die Zufuhreinheit (100) ferner eine Vielzahlzahl von Rückschlagventilen (V21, V22) umfasst, die jeweils an der Vielzahl von Abgabeleitungen (L1, L2) angeordnet sind.

3. System nach Anspruch 1, wobei die Umwälzeinheit (200) ferner eine Umwälzpumpe (210) umfasst, die das Treiböl unter Druck setzt und umwälzt.

4. System nach Anspruch 3, wobei die Umwälzpumpe (210) den Druck des durch die Umwälzeinheit (200) zirkulierenden Treiböls auf 8 bar bis 10 bar hält.

5. System nach Anspruch 1, wobei eine Durchflussmenge des durch die Umwälzeinheit (200) zirkulierenden Treiböls etwa dem Dreifachen eines maximalen Kraftstoffverbrauchs des Motors (E) entspricht.

6. System nach Anspruch 1, wobei die Verhältnisberechnungseinheit (310) einen Viskositätsmischungsindex (VBI) gemäß folgendes Gleichung ermittelt: $VBI = 14{,}534 \times \ln(\ln(v+0{,}8)) + 10{,}975$, wobei $v$ eine Viskosität in cSt, wobei $1\,cSt = 1\,mm^2/s$, jeder Komponente des durch die Umwälzeinheit zirkulierenden Treiböls bezeichnet und $w\_A$ und $w\_B$ für eine Treibölmischung, die zwei Arten von Treibölen beinhaltet, ermittelt, gemäß folgenden Gleichungen: $VBI\_blend = (w\_A \times VBI\_A) + (w\_B \times VBI\_B)$, wobei $w\_A$ und $w\_B$ jeweils einen Gewichtsanteil der Komponenten A und B in einer Treibölmischung bezeichnen und ein Gewichtsanteil $w$ jeder Komponente bei einer gegebenen Temperatur bestimmt wird; und $v\_blend = \{\exp(\exp(VBI\_blend - 10.975) \div 14.534\} - 0{,}8$, wobei $v\_blend$ die Viskosität der Treibölmischung bezeichnet.

7. System nach Anspruch 1, wobei die Umwälzeinheit (200) ferner ein Heizeinrichtung (220) umfasst und die Heizeinrichtung das Treiböl erwärmt, wenn die Viskosität des durch die Umwälzeinheit zirkulierenden Treiböls über einem für den Motor erforderlichen Viskositätsgrad ist.

8. System nach Anspruch 1, wobei die Umwälzeinheit ferner einen Kühler (250) umfasst, und wenn eine Viskosität des durch die Umwälzeinheit zirkulierenden Kraftstoffs unter einem vom Motor geforderten Viskositätsgrad ist, der Kühler das Treiböl kühlt.

9. System nach Anspruch 1, wobei die Umwälzeinheit (200) ferner eine stromabwärts des Motors (E) angeordnete Treibölleitung (240) umfasst, um das nach der Verwendung in dem Motor verbleibende Treiböl vorübergehend zu speichern.

**Revendications**

1. Système pour la commutation entre différents types de fioul pour un moteur (E) de navire, le système comprenant :

une unité d'alimentation (100) qui fournit du fioul ;
une unité de circulation (200) qui fait circuler le fioul reçu de la part de l'unité d'alimentation ;
un dispositif de commande (300) qui commande l'unité d'alimentation et l'unité de circulation ;
dans lequel :

l'unité d'alimentation comprend une pluralité de réservoirs (T1, T2) qui stockent respectivement les différents types de fiouls, et un premier débitmètre (120) qui mesure un débit du fioul qui est un mélange des différents types de fiouls respectivement évacués par la pluralité de réservoirs (T1, T2) afin d'être envoyés vers l'unité de circulation (200) ;
le moteur (E) reçoit le fioul de la part de l'unité de circulation (200) ;
le fioul qui reste après utilisation dans le moteur est remis en circulation à travers l'unité de circulation (200) ; et
le dispositif de commande (300) régule un rapport de mélange du fioul à envoyer vers le moteur en contrôlant les débits des différents types de fiouls évacués par la pluralité de réservoirs,
dans lequel l'unité de circulation (200) fait circuler le mélange de fioul vers le moteur (E) et l'unité d'alimentation (100) renvoie à l'unité de circulation (200) la même quantité de fioul que celle consommée par le moteur (E), le système fonctionnant de sorte que le premier débitmètre (120) indique un débit égal à une consommation de fioul par heure du moteur (E),
dans lequel l'unité d'alimentation (100) comprend en outre : une pluralité de conduites d'évacuation (L1, L2) par lesquelles les différents types respectifs de fiouls sont évacués de la pluralité de réservoirs (T1, T2) ; et une pluralité de vannes de commande (V11, V12) disposés sur la pluralité de conduites d'évacuation, respectivement, et le dispositif de commande (300) régule le rapport de mélange du fioul en ajustant les degrés d'ouverture de la pluralité de vannes de commande,

dans lequel le dispositif de commande (300) comprend une unité de calcul de rapport (310) ; l'unité de circulation (200) comprend en outre un premier capteur de température (241) qui mesure une température du fioul à fournir au moteur et un capteur de viscosité (230) qui mesure une viscosité du fioul à fournir au moteur ; une valeur de la température du fioul mesurée par le premier capteur de température et une valeur de la viscosité du fioul mesurée par le capteur de viscosité sont transmises à l'unité de calcul de rapport ; et l'unité de calcul de rapport (310) calcule un rapport de mélange des différents types de fiouls dans le fioul qui circule à travers l'unité de circulation,

dans lequel le dispositif de commande (300) comprend en outre un système d'automatisation intégré (320), le système d'automatisation intégré recevant : une valeur du rapport de mélange du fioul calculée par l'unité de calcul de rapport (310) ; la valeur de la température du fioul transmise par le premier capteur de température (241) à l'unité de calcul de rapport ; et la valeur de la viscosité du fioul transmise par le capteur de viscosité (230) à l'unité de calcul de rapport, de la part de l'unité de calcul de rapport, et

dans lequel le système d'automatisation intégré (320) régule la température et le rapport de mélange du fioul de sorte que la valeur de viscosité du fioul reçue de la part de l'unité de calcul de rapport (310) satisfasse un niveau de viscosité requis par le moteur, reçoit un retour d'information sur la température régulée du fioul sur la base de la valeur de température mesurée par le premier capteur de température (241) et reçue de la part de l'unité de calcul de rapport, et reçoit un retour d'information sur le rapport de mélange régulé du fioul sur la base de la valeur de viscosité mesurée par le capteur de viscosité (230) et reçue de la part de l'unité de calcul de rapport.

2. Système selon la revendication 1, dans lequel l'unité d'alimentation (100) comprend en outre une pluralité de clapets de anti-retour (V21, V22) disposés sur la pluralité de conduites d'évacuation (L1, L2), respectivement.

3. Système selon la revendication 1, dans lequel l'unité de circulation (200) comprend en outre une pompe de circulation (210) qui pressurise et fait circuler le fioul.

4. Système selon la revendication 3, dans lequel la pompe de circulation (210) maintient une pression du fioul qui circule à travers l'unité de circulation (200) entre 8 et 10 bars.

5. Système selon la revendication 1, dans lequel un débit du fioul qui circule à travers l'unité de circulation (200) correspond à environ trois fois une consommation de carburant maximale du moteur (E).

6. Système selon la revendication 1, dans lequel l'unité de calcul de rapport (310) trouve un indice de viscosité du mélange (VBI) selon l'équation : $VBI = 14,534 \times \ln(\ln(v+0,8)) + 10,975$, où $v$ représente une viscosité en cSt, où 1 cSt = 1 mm$^2$/s, de chaque composant du fioul qui circule à travers l'unité de circulation et trouve w_A et w_B, pour un mélange de fioul comprenant deux types de fiouls, selon les équations : $VBI\_blend = (w\_A \times VBI\_A) + (w\_B \times VBI\_B)$, où w_A et w_B représentent respectivement une proportion en poids des composants A et B dans un mélange de fioul et une proportion en poids w de chaque composant est déterminée à une température donnée ; et $v\_blend = \{\exp(\exp(VBI\_blend-10,975) / 14,534\} - 0,8$, où v_blend représente une viscosité du mélange de fioul.

7. Système selon la revendication 1, dans lequel l'unité de circulation (200) comprend en outre un dispositif de chauffage (220), et, lorsqu'une viscosité du fioul qui circule à travers l'unité de circulation est supérieure à un niveau de viscosité requis par le moteur, le dispositif de chauffage chauffe le fioul.

8. Système selon la revendication 1, dans lequel l'unité de circulation comprend en outre un refroidisseur (250), et, lorsqu'une viscosité du fioul qui circule à travers l'unité de circulation est inférieure à un niveau de viscosité requis par le moteur, le refroidisseur refroidit le fioul.

9. Système selon la revendication 1, dans lequel l'unité de circulation (200) comprend en outre un conduit de fioul (240) disposé en aval du moteur (E) afin de stocker temporairement le fioul restant après utilisation dans le moteur.

【FIG. 1】

【FIG. 2】

【FIG. 3】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2211041 A1
- KR 20160074839 A